# EUROPEAN PATENT APPLICATION

(11) **EP 2 226 706 A1**
(43) Date of publication of application: **08.09.2010**
(21) Application number: 08863764.0
(22) Date of filing: 18.12.2008
(51) Int. Cl.: G06F 3/038

(54) **INFORMATION PROCESSING DEVICE AND INFORMATION PROCESSING METHOD**

(30) Priority: 25.12.2007 JP 2007331799
(71) Applicant: NEC Corporation, Minato-ku Tokyo 108-8001 (JP)
(72) Inventor: SAKANABA, Takayuki, Tokyo 108-8001 (JP)
(74) Representative: Betten & Resch
(86) International application number: PCT/JP2008/073662
(87) International publication number: WO 2009/081994

(57) **Abstract**

An information processing apparatus which enables a pointer to move a long distance on a screen at a time is provided.

The present invention comprises an operation means equipped with a plurality of keys, a display means which displays a pointer for indicating a position on a screen, and a control means which divides at least part of the screen of the display means into a plurality of areas corresponding to plurality of keys, and when either key among plurality of keys is selected in order to move the pointer, moves the pointer to the area corresponding to the selected key and makes a display means perform a display highlighting the pointer.

## Description

### Technical field

The present invention relates to an information processing apparatus and an information processing method which display a pointer.

### Background art

An operation part of a mobile phone and a keyboard of a personal computer (hereinafter, referred to as a PC) may have a key for moving a pointer which indicates a position on a screen of a display. For example, by pushing these keys including a cursor key which indicates the movement directions of the pointer, a user can move the pointer to the direction with a predetermined interval.

A technology concerning a movement of a pointer is disclosed by patent document 1. In the technology disclosed in this document, a user decides to which direction to move a pointer on a screen, pushes the adjacent key relative to a specific key in the direction of moving the pointer, and moves the pointer to the direction. By so doing, even if there is no mouse, the user can move the pointer to the desired direction.

In patent document 2, a coordinate input method by a key input is disclosed. In this document, in order to make possible the technology disclosed in patent document 1, a method for changing a character input function into a function for moving a pointer is disclosed.

In patent document 3, a technology which moves a pointer to a designation position immediately by pushing a key corresponding to an area of a subdivided screen, is disclosed.

Patent document 1: Japanese Patent Application Laid-Open No. 1996-6693

Patent document 2: Japanese Patent Application Laid-Open No. 1999-154054

Patent document 3: Japanese Patent Application Laid-Open No. 2002-149311

### Disclosure of the invention

### Technical Problem

When trying to move a pointer by pushing a cursor key as mentioned above, the cursor key needs to be pushed many times when moving the pointer for a long distance. For this reason, there is a problem that, according to the movement distance of the pointer, the amount of operations by a user increases.

In the technology disclosed in patent document 1, when trying to move a pointer for a long distance in one operation, a movement parameter which decides how long to move the pointer when a key is pushed once has to be set to a long distance in advance, and this operation is troublesome.

In the technology disclosed in patent document 3, because a pointer jumps for a long distance discontinuously, a user tends to lose sight of the pointer.

The object of the present invention is to provide an information processing apparatus and an information processing method which settle problems that the technologies mentioned above have.

### Technical Solution

An information processing apparatus of the present invention for achieving the above-mentioned object is a structure comprising; an operation means equipped with a plurality of keys; a display means which displays a pointer for indicating a position on a screen; and a control means which divides at least part of a screen of the display into a plurality of areas corresponding to the plurality of keys and which, when either key among the plurality of keys is selected in order to move the pointer, moves said pointer to an area corresponding to a selected key and makes the display means perform a display highlighting the pointer.

Further, an information processing method of the present invention for achieving the above-mentioned object is the information processing method realized by an information processing apparatus comprising an operation means equipped with a plurality of keys and a display means which displays a pointer for indicating a position on a screen, and when either key among the plurality of keys is selected in order to move the pointer, moves said pointer to an area on a screen of said display means corresponding to a selected key, and makes the display means perform a display highlighting the pointer.

### Advantageous Effects

An information processing apparatus and an information processing method of the present invention can move a pointer on a screen for a long distance by small number of operations. Further, an information processing apparatus and an information processing method of the present invention have the effect that a user can easily find a pointer after a move.

### Brier description of the drawings

[Fig. 1] a drawing showing an outward appearance of a mobile phone of the first exemplary embodiment.
[Fig. 2] a block diagram showing one exemplary configuration of a mobile phone of the first exemplary embodiment.
[Fig. 3A] a drawing showing an example of a web page displayed on a display part.
[Fig. 3B] a drawing showing an example of a web page displayed on a display part.
[Fig. 4A] a drawing illustrating an operation of a mobile phone of the first exemplary embodiment.
[Fig. 4B] a drawing illustrating an operation of a mobile phone of the first exemplary embodiment.
[Fig. 5] a flow chart showing an operation procedure of a mobile phone of the first exemplary embodiment.
[Fig. 6] a drawing illustrating an operation of a mobile phone of the second exemplary embodiment.
[Fig. 7] a drawing showing an example of the third exemplary embodiment, in which a display screen is divided corresponding to a key of a keyboard of an information processing apparatus.
[Fig. 8] a block diagram showing a main functional structure of a mobile phone of the first exemplary embodiment.

### Explanation of Reference

- 11: Display part.

- 14: Control unit.

### Best mode for carrying out the invention

An exemplary embodiment of an information processing apparatus of the present invention is described.

### (The first exemplary embodiment)

This exemplary embodiment describes a case when an information processing apparatus is a mobile phone. It is supposed that a mobile phone of this exemplary embodiment includes, in addition to a calling function by a wireless communication, a web page access function for accessing a web page stored on a server, by a wireless communication, via a network such as an internet. A web page is the contents which are provided by a server connected to a network, and whose purposes are for reading. Because a calling function and a web page access function are similar to those of a usual mobile terminal, the detailed description is omitted here.

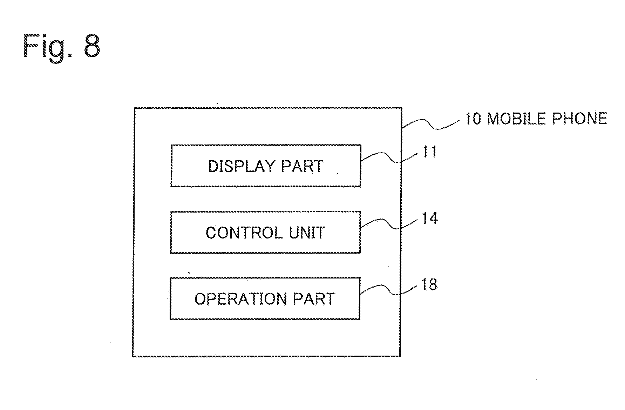

A general configuration of a mobile phone of this exemplary embodiment is described. Fig. 8 is a block diagram showing a main functional structure of a mobile phone of this exemplary embodiment.

As shown in Fig. 8, as a main component, a mobile phone 10 of this exemplary embodiment includes a display part 11, a control unit 14 and an operation part 18. The display part 11 is also called a display.

The display part 11 displays a pointer on its screen. The screen of the display part 11 is divided into a plurality of areas. The operation part 18 has a plurality of keys, and they are correlated to a plurality of areas on the screen of the display 11.

When one of the keys correlated to an area is pushed and selected, the control unit 18 moves the pointer to the area corresponding to the selected key. And performs a display highlighting the pointer.

By so doing, the mobile phone of this exemplary embodiment can, only by pushing the key correlated to the area, move the pointer to the area. Because the display highlighting the pointer is performed after the move, a user can easily find the pointer and rarely loses sight of it.

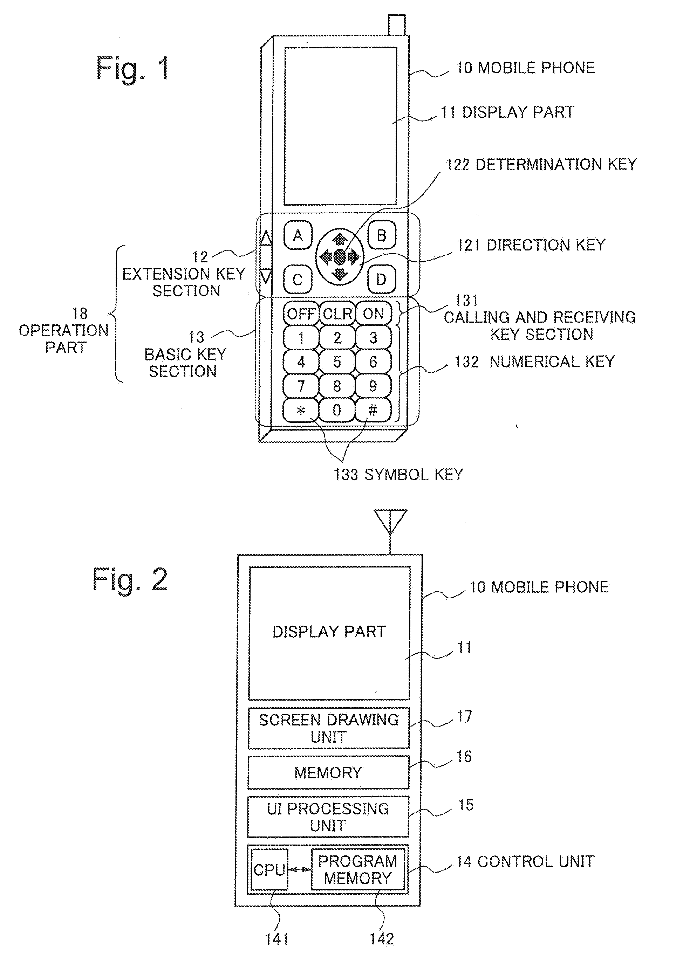

Next, the detailed configuration of a mobile phone of this exemplary embodiment is described. Fig. 1 is a drawing showing an outward appearance of a mobile phone of this exemplary embodiment.

As shown in Fig. 1, a mobile phone 10 of this exemplary embodiment has a display part 11 that shows information and an operation part 18 for a user to input directions. The operation part 18 includes a basic key section 13 for operations during a call, and an extension key section 12 for operations when selecting one out of a plurality of items displayed on the display part 11.

The extension key section 12 has a direction key 121 for moving a pointer on a screen displayed on the display part 11 and a determination key 122 for selecting an item that the pointer designates on the screen of the display part 11.

The direction key 121 is a circular button on which an arrow which indicates respective directions of left, right, up or down is printed. The direction key 121 is also called a pointer navigation key or a cursor key. On the back of the direction key 121, corresponding to a printed position of each arrow, a sensor (not shown) is installed. When a user pushes one of the arrows among left, right, up or down arrows, the pointer moves on the screen of the display part 11 in the direction that the pushed arrow indicates only for a predetermined distance. Thus, by pushing the direction key 121, a user can move the pointer displayed on the screen of the display part 11 to any direction among left, right, up or down. Further, according to this exemplary embodiment, although the direction key 121 is composed of a tabular and circular form, it may be composed of a stick-like one.

The determination key 122 is installed in the center of the direction key 121. By pushing this key, it becomes possible for a user to select the item that the pointer displayed on the screen of the display part 11 indicates.

The basic key section 13 has a calling and receiving key section 131 used during a call, a numerical key 132 consisting of 0-9 and a symbol key 133 including "*" and "#".

The calling and receiving key section 131 includes three keys. Those three keys are, an on-key which is pushed by a user when making or receiving a call on the telephone, an off-key which is pushed by a user when disconnecting the telephone, and a cancel key (CLR) for canceling the function that is being executed.

The numerical key 132 and the symbol key 133 consist of altogether twelve numeral or symbol keys, and are arranged as three columns by four rows. The numerical key 132 and the symbol key 133 are used, in addition for the purpose of inputting a character, in this exemplary embodiment, for a user to utilize a function to move a pointer at high speed on the screen. Details of these key operations of this exemplary embodiment are described later.

Further, in Fig. 1, although a numeral and a symbol are displayed on the numerical key part 132 and the symbol key 133 respectively, it is possible to input other characters such like an alphabetic character, the hiragana or the katakana, utilizing an input conversion operation. As these input conversion operation and character input function are similar to those of a general mobile phone, the detailed description is omitted.

By user's operating the extension key section 12 and the basic key section 13, the display part 11 shows various contents stored on a server over a network and information about the operation of a mobile phone. For the contents and information which the display part 11 shows, a user then, by operating the extension key section 12 and the basic key section 13, inputs instructions.

Further, in this exemplary embodiment, it is supposed that the display part 11 is a liquid crystal display. And a speaker and a microphone are omitted to be shown in Fig. 1.

Fig. 2 is a block diagram showing one exemplary configuration of a mobile phone of this exemplary embodiment.

As shown in Fig. 2, a mobile phone 10 has a structure comprising a display part 11, a screen drawing unit 17 which draws an image of the display part 11, a memory 16 which stores information of a telephone directory including a telephone number and a mail address, a control unit 14 which controls each of these parts, and a UI (User Interface) processing part 15 which is configured between the control unit 14 and the operation part 18 shown in Fig. 1.

The memory 16 stores various application programs in addition to the telephone directory.

The UI processing unit 15 is an interface which transmits a signal inputted via the operation part 18 to the control unit 14.

The screen drawing unit 17 includes a driver circuit for driving a liquid crystal display and controls the display part 11 according to the image information which is received from the control unit 14.

The control unit 14 has a CPU (Central Processing Unit) 141 which executes a process according to a program, and a program memory 142 for storing the program. The control unit 14 reads required contents of the process from the memory 16 according to the information received from outside or the information inputted via the operation part 18. When the contents of the process are related to a display, the control unit 14 transmits the image information which is to be displayed to the screen drawing unit 17. In the program, not only the contents for performing this process are written, but also the contents of the process concerning an operation of a pointer movement, which is described later, are described. In the following, an operation of the control unit 14, in case a web page is received, is described.

When the image information of a web page is received via a network, the control unit 14 transmits the image information to the screen drawing unit 17. When the image is displayed on the display part 11, the control unit 14 divides at least a part of the screen where the image is displayed into a plurality of areas. These divided areas can be a movement destination of the pointer. The control unit 14 assigns each of these areas to a respective key of character input keys including the numerical key 132 and the symbol key 133, one to one.

And the control unit 14 stores a coordinate of the area on the screen and the information of the key corresponding to the area in the memory 16. When the area is a square, a coordinate of the area may be expressed by a coordinate of its four vertexes. Then the control unit 14 displays the pointer in any arbitrary area among a plurality of areas. Although there are altogether twelve numerical key 132 and symbol key 133, when a number of divided areas is fewer than twelve, there may be a key which is not assigned to an area. In other words, the number of keys assigned to the areas may be eight or four which are less than twelve.

When a user, in order to move a pointer at high speed on the screen, pushes a key among the numerical key 132 and the symbol key 133 corresponding to the area of the movement destination of the pointer, the control unit 14 recognizes that the key is selected. Next, it reads the coordinate of the area corresponding to the selected key from the memory 16, moves the pointer to the area, and makes the display part 11 perform a display highlighting the pointer by the screen drawing unit 17.

As examples of a display highlighting the pointer, there are making the brightness of the area of the movement destination of the pointer different from the brightness of other areas and blinking the frame of the area of the movement destination. As other examples, there are blinking, changing the color and increasing the size of the pointer. Or two or more among these display methods may be combined. However, in case the size of the pointer is increased, as a user cannot see the part covered by the pointer while the size of the pointer remains increased, it may be returned to the original size after it is increased only for a time period set in advance. Concerning the cases other than increasing the size, a time period for the operation may also be set in advance.

When moving a pointer between areas, it may be set in advance in which position of the area of the movement destination the pointer is displayed. In this exemplary embodiment, the pointer is displayed at the center of the area of the movement destination.

Further, during a key operation using the numerical key 132 and the symbol key 133, there are cases when a user performs a character input, instead of a movement of a pointer. In such a case, an input mode may switch over to a character input mode, when a "double push" in which case a key is pushed consecutively during a predetermined time or a "long push" in which case a key is kept pushed more than a predetermined time, are performed. Or it may switch over by executing other operations. Or, a mobile phone 10 may have an input mode switching button separately.

Next, an operation of a hyperlink set in a web page is described briefly.

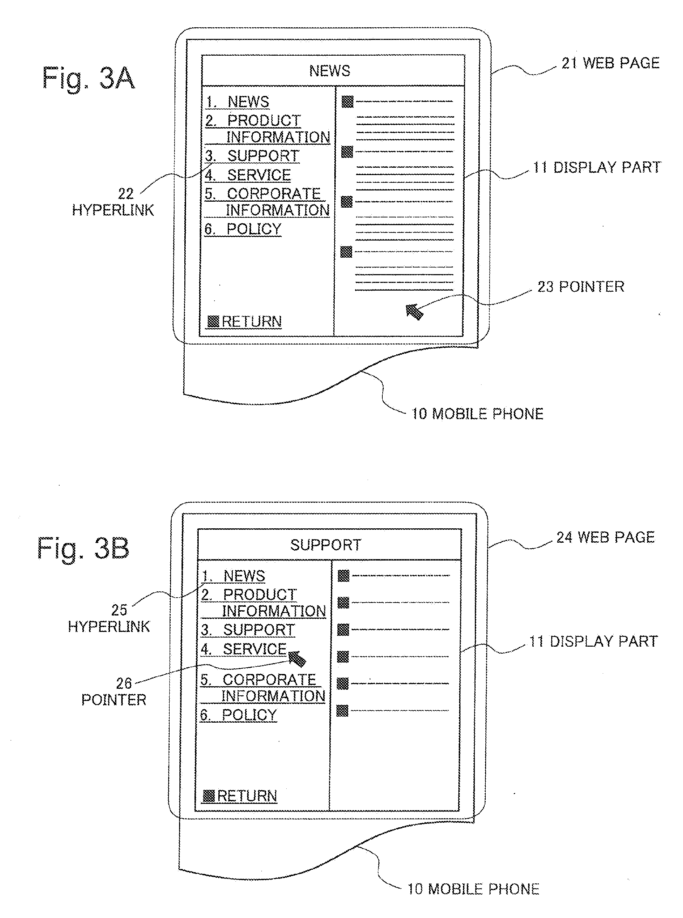

Fig. 3A and Fig. 3B are drawings showing an example of a web page displayed on a display part. Fig. 3B indicates a page of a link destination when a hyperlink set in a page shown in Fig. 3A is operated.

Fig. 3A is a screen which shows a web page 21 for introducing a corporation and products of the corporation. On the left side of the screen, items of the accessible information are displayed. In Fig. 3A, because the item "1. news" on the left side of the screen is selected, information concerning this item is displayed on the right side of the screen. On the right side of the screen, for each of a plurality of news, posted date on a web page and a title are displayed in pair. A pointer 23 displayed at the bottom and on the right side of the screen serves as a cursor for web pages.

A hyperlink for accessing a page which shows the contents about each is set to an item on the left side of the screen and a title on the right side of the screen. To the item "Return" indicated at the bottom and on the left side of the screen, a link for returning to the page displayed previous to this screen is set.

A user operates the operation part 18, moves the pointer 23 to the item "3. support" on the left side of the screen of Fig. 3A, places the pointer 23 on the field of the item in order to input a signal to select the item, and pushes the determination key 122 shown in Fig. 1. By this selection operation, the hyperlink 22 operates and the web page 24 shown in Fig. 3B is displayed on the screen of the display part 11.

On the right side of the screen of Fig. 3B, a title about a support of a product is displayed. A hyperlink is also set to each of these titles. Similar to the cases of the selection operation mentioned above, when a hyperlink 25 of the item "1. news" on the left side of the screen is operated, a page shown in Fig. 3A is displayed on the screen.

When moving a pointer on the screen, a user usually pushes the direction key 121 shown in Fig. 1 and moves the pointer. The movement distance of the pointer by pushing the direction key 121 once is decided in advance. Although it also depends on the size of a character displayed on the screen, the movement distance per one time is around the size of a single character or less. This is in order to enable the pointer to move to any corner of the interval screen. When trying to move the pointer 23 in the position shown in Fig. 3A to the position of the item "3. support", a user needs to push the direction key 121 toward upper direction and toward left direction many times.

A mobile phone 10 of this exemplary embodiment can move a pointer by a different method than usual. An operation of a mobile phone 10 of this exemplary embodiment is described below.

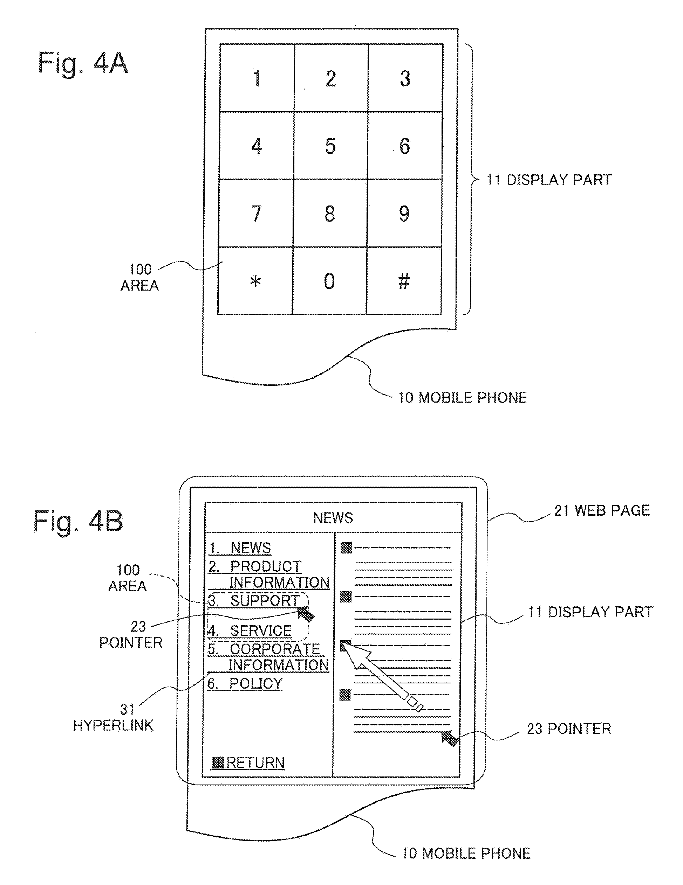

Fig. 4A and Fig. 4B are drawings illustrating an operation of a mobile phone 10 of this exemplary embodiment. Fig. 4A indicates a case when a screen of a display part 11 is divided into a plurality of areas 100. Each area 100 shows a character of a corresponding key. Although a frame which indicates the size of the area 100 and the character on the key are not displayed on the display part 11 actually, they are shown in Fig. 4A for explanation purposes. Fig. 4B indicates a case when a web page 21 shown in Fig. 3A is applied to Fig. 4A.

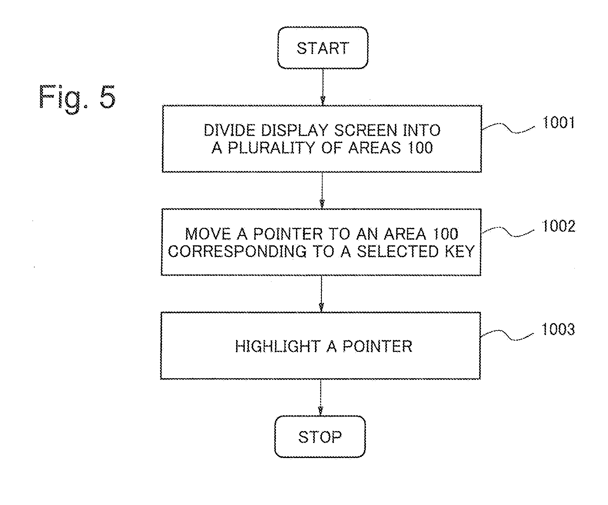

Fig. 5 is a flow chart showing an operation procedure of a mobile phone of this exemplary embodiment.

When the image information of a web page is received from outside, the control unit 14 displays an image of a web page on the display part 11 via the screen drawing unit 17. Next, the control unit 14 divides the display screen of the display part 11 into a plurality of areas corresponding to respective keys of a character input key including the numerical key 132 and the symbol key 133 (Step 1001), and stores the correspondence information which indicates correspondences between an area and a key into the memory 16. As shown in Fig. 4B, the control unit 14 displays a pointer 23 on the lower right side of the screen. In Fig. 4B, the control unit 14 displays the pointer 23 in an area corresponding to a key of the symbol "#".

When a user sees a screen shown in Fig. 4B, and tries to move the pointer 23 to a position of the item "4. service", and pushes a key of the number "4" of the numerical key 132, the control unit 14 recognizes that the key of the number "4" is selected. Next, the control unit 14 refers to the correspondence information stored in the memory 16 and specifies the area corresponding to the key of the number "4". And the control unit 14 moves the pointer to the central coordinate of the specified area. That is, pointer 23' is displayed by the screen drawing unit 17 (Step 1002). Further, the control unit 14 makes the screen drawing unit 17 perform a blinking display of the frame of the area 100 which is indicated by a broken line in Fig. 4B, and which corresponds to the key of the number "4" (Step 1003).

By the operation of Step 1002, the pointer 23 shown in Fig. 4B moves from the area 100 corresponding to the key of the symbol "#" to the position of pointer 23' in the center of the area 100 corresponding to the key of the number "4" in an instant. The movement distance of the pointer between the areas is, even for the shortest course, about 5-8 times as long as a case when the direction key 121 is pushed once. In Fig. 4B, as the pointer moves in two areas along a diagonal line of an area 100, the pointer moves between the areas diagonally for two areas. Therefore, by a single key operation in this case, the pointer moves 5-8 times 2 times square root of 2, which equals to 14-22 times, of distance more than a single operation of the direction key 121. That is, only by performing a single key operation, the pointer moves no less than 10 times of longer distance than usual.

Even when the pointer moves such a long distance in one time, the frame of the area 100 of the movement destination blinks. Because a user only needs to look for the pointer in the frame which blinks, it becomes possible to recognize the position of the pointer 23' immediately.

In a case shown in Fig. 4B, because the pointer 23' is shown at the position which is near to the item "3. support", a user needs to move the pointer 23' to the position of the item "4. service". Because the distance between the item "3. support" and the item "4. service" is only for about 2 characters, after pushing the downward direction key of the direction key 121 several times and moving the pointer 23' to the position of the item "4. service", it is sufficient for a user to operate a hyperlink 31.

A mobile phone of this exemplary embodiment divides a screen into a plurality of areas, and assigns a key to each area correspondingly. In case of moving a pointer for a long distance on the screen, when a user pushes a key once, the pointer moves to the area corresponding to the pushed key, and accordingly it becomes possible for the user to move the pointer for a long distance in a single operation. By this, a user can move the pointer quickly and correctly. Also a user can greatly reduce the number of operations for the pointer movement using the direction key.

Further, after moving a pointer, a mobile phone of this exemplary embodiment performs a display highlighting a pointer. For this reason, a user can confirm immediately whether the pointer has moved to the area as desired. Even if the pointer moves to a different area other than the area which the user desires, by blinking the pointer, or by blinking the frame of the area, it becomes possible for the user to find the pointer immediately.

When a whole body of the character input key is assigned to the whole screen, it becomes easier for a user to recognize the area corresponding to each key visually and the user can easily distinguish to which key the area, which is desired as the movement destination of the pointer, corresponds.

For a mobile phone which performs a pointer movement only using the direction key 121, by making the movement distance of the pointer by a key input of the direction key 121 shorter and by lowering the sensitivity of the direction key 121, when moving the pointer for a short distance, accuracy of the movement distance improves. However, when moving the pointer for a long distance, the number of times that the direction key 121 is pushed increases according to the distance, and the number of operation becomes larger than that of before changing the sensitivity. In contrast, for a mobile phone of this exemplary embodiment, in case of moving a pointer for a long distance, it is enough to operate a character input key, and in case of moving a pointer for a short distance, it is enough to operate the usual direction key 121, thus, even if the sensitivity of the direction key 121 is raised, it becomes possible to keep a decrease of a user's operational ease at a minimum.

In particular, a general mobile phone is difficult to distinguish a pointer because a screen is small, and is difficult to operate because a body is small. Also, from the characteristics of the device, in many cases, a user, while standing and holding a mobile phone by one hand, operates a key by using a thumb only. Therefore, although it is difficult to move a pointer quickly and correctly only by using the usual method, a mobile phone of this exemplary embodiment can move a pointer to a coordinate of a target quickly.

(The second exemplary embodiment) An information processing apparatus of this exemplary embodiment divides a movement destination area of a pointer further into a plurality of parts. By so doing, a movement of a small distance of a pointer becomes operable easily.

Further, it is supposed that an information processing apparatus of this exemplary embodiment is a mobile phone which has the same structure as a mobile phone described in the first exemplary embodiment. The point different from the first exemplary embodiment is described in detail below.

According to this exemplary embodiment, after moving a pointer to an area corresponding to a selected key, the control unit 14 divides at least part of the area of the movement destination into a plurality of parts, corresponding to the respective keys of a character input key including the numerical key 132 and the symbol key 133. And when either key among a plurality of these keys is selected, the pointer is moved to the part corresponding to the selected key.

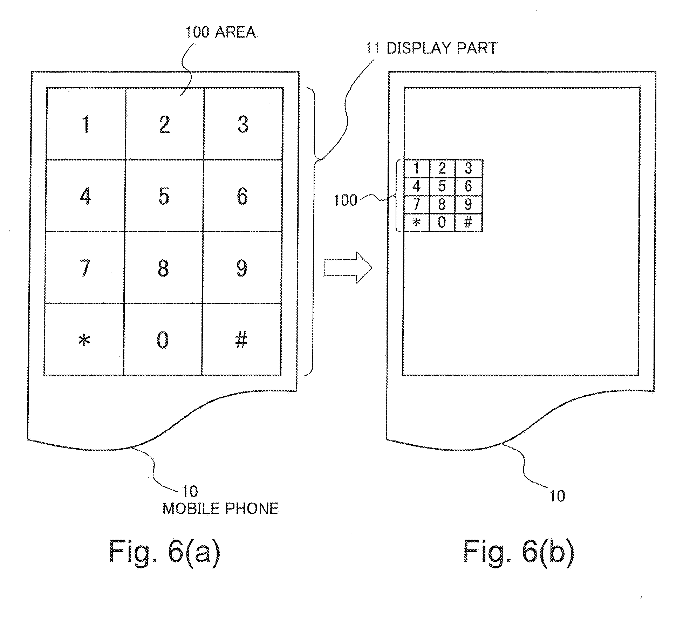

Fig. 6 is a drawing illustrating an operation of a mobile phone of this exemplary embodiment.

As shown in Fig. 6 (a), after the control unit 14 divides the display part 11 into a plurality of areas 100, it is supposed that a user selects the key of the number "4". In this case, the control unit 14 divides the area 100 corresponding to the key of the number "4" further into twelve parts 150. And as shown in Fig. 6 (b), a key is assigned to each part 150. When the user selects either one of the twelve keys, the control unit 14 moves the pointer to the part 150 corresponding to the selected key.

Further, the frames and the characters inside thereof of each of the areas and each of the parts shown in Fig. 6 (a) and Fig. 6 (b), are not displayed actually.

A mobile phone of the first exemplary embodiment, by dividing the whole screen into a plurality of areas and assigning a corresponding key to each respectively, makes it possible for a pointer movement to each area to be performed quickly. A mobile phone of this exemplary embodiment divides the area of the first movement destination of the pointer further into a plurality of parts, assigns a key to the respective parts once again, thus enabling a movement of the distance shorter than the first movement.

A mobile phone of this exemplary embodiment can move a pointer for a long distance by the first key operation and can move the pointer for the distance shorter than the first time by the second key operation. According to this exemplary embodiment, although only a case of two times of key operation is described, the part 150 shown in Fig. 6 (b) may be divided once again, and the movement distance of the pointer by a single key operation may be made even shorter. In this case, without changing an operation method, a user can make a movement distance of a pointer from a long distance to a shorter distance.

### (The third exemplary embodiment)

According to the first and the second exemplary embodiment, although a case is described when an information processing apparatus is a mobile phone, an information processing apparatus may also be a desktop type or a notebook type PC. While displaying a web page of how to make a dish on a display of a PC, and in case a user cooks it while looking at it, as a hand needs to be kept clean, there are cases when a mouse may not be operated. In such a case, by holding a writing pen in a mouth and operating a key, it becomes possible for a user to operate a hyperlink set to the web page. This exemplary embodiment describes another exemplary embodiment in case of an information processing apparatus having a keyboard.

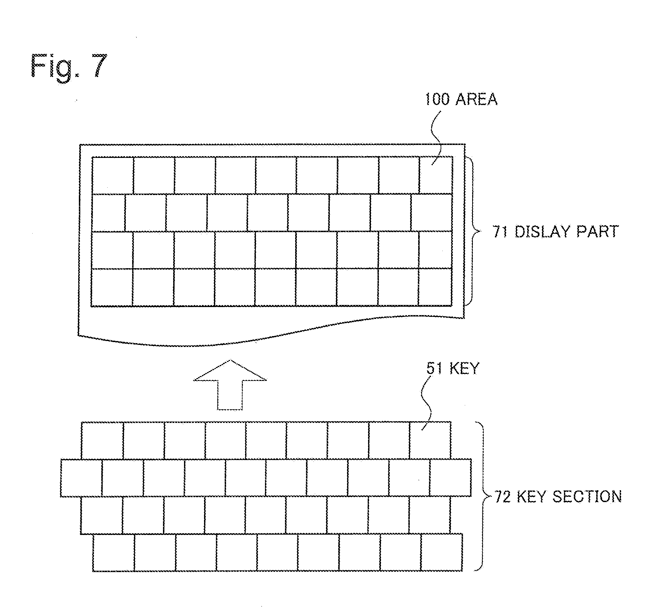

Fig. 7 is a drawing showing an example when a display screen is divided corresponding to a key of a keyboard. Fig. 7 (a) shows a display part 71, and Fig. 7 (b) shows a part of the keyboard.

Because a keyboard is a device for enabling various characters to be inputted, the number of keys is larger compared to the character input key of the mobile phone 10 shown in Fig. 1. Therefore, rather than using all of the character input keys set on a keyboard, only its part may be assigned to divide a screen.

Further, as a key is arranged on a keyboard considering easiness of inputting a character, there are cases, as shown in Fig. 7 (b), where a key 51 is not placed precisely in line vertically and horizontally. In this case, in line with a key arrangement in the key section 72 of Fig. 7 (b), the manner of the division on a screen may be changed as shown in the display part 71 of Fig.7 (a).

In an example shown in Fig. 7 (a), although the display part 71 is divided horizontally into nine areas 100 in the first row, the third row and the fourth row, it is divided into ten areas 100 in the second row.

In this exemplary embodiment also, it is an issue how to switch the input mode of the key operation. In other words, when a key operation is performed, it is necessary for a user to be able to select either of an input for a pointer movement or a character input. As a measure for this issue, as is described in the first exemplary embodiment, an operation for an input mode switch may be decided in advance or a key for exclusive use is set up for the input mode switch.

Or, an exclusive key and a switching operation may be combined. For example, suppose that an information processing apparatus of this exemplary embodiment is equipped with a screen allocation key which is a key for instructing a division of a screen. In this case, by performing a combination input, which is, two of the keys, a specific key and a screen allocation key, are pushed simultaneously, or by performing a long push of a screen allocation key, a character input key may switch over to the input key for the pointer movement. And, by executing those operations once more again, the original character input mode may be recovered.

Further, although in the first to the third exemplary embodiments, the whole screen was divided and a key is assigned to the respective areas or parts, by dividing the screen only limitedly to the range of a movement destination of a pointer, a key may be assigned to each of the screen thus divided. In this case, because a pointer does not move to the range any more where a hyperlink or a character input field are not set, cases when a user performs an unnecessary pointer movement become less.

Further, a divided area or a part may be a single hyperlink or a character input field itself. In this case, it is not necessary to move the pointer further in the area or in the part.

Although the screen drawing unit 17 which performs a drawing control of an image is described as an independent structure, the screen drawing unit 17 may be configured as a structure to be included in the control unit 14. Also the UI processing unit 15 may be configured as a structure to be included in the operation part 18. The correspondence information between a key and an area may be stored in the program memory 142 in the control unit 14.

Further, although an operation procedure for a case when displaying a web page is described, by displaying a telephone directory on the screen, the above-mentioned operation procedure may be performed to the telephone directory.

Although the present invention has been described with reference to exemplary embodiments above, the present invention is not limited to the above-mentioned exemplary embodiments. In the composition of the present invention and details, various changes may be performed within the scope of the present invention and to the extent a person skilled in the art can understand.

This application claims priority based on Japanese patent application Japanese Patent Application No. 2007-331799 filed on December 25th, 2007 and the disclosure thereof is incorporated herein in its entirety.

## Claims

1. An information processing apparatus comprising; an operation means equipped with a plurality of keys; a display means which displays a pointer for indicating a position on a screen; and a control means which divides at least part of a screen of said display means into a plurality of areas corresponding to said plurality of keys, and when either key among said plurality of keys is selected in order to move said pointer, moves said pointer to an area corresponding to a selected key and makes said display means perform a display highlighting said pointer.

2. The information processing apparatus according to claim 1, wherein the display highlighting said pointer further comprising; either of changing brightness of an area of a movement destination of said pointer being different from other areas; blinking a frame of said area; blinking said pointer; or changing a color of said pointer; or a combination of no smaller than two thereof.

3. The information processing apparatus according to claims 1 or 2, wherein the display highlighting said pointer makes a size of said pointer increase for only a predetermined time.

4. The information processing apparatus according to any one of claims 1 to 3, wherein said control means, after moving said pointer to an area corresponding to a selected key, divides at least part of said area into a plurality of parts corresponding to said plurality of keys, and when either key among said plurality of keys is selected, moves said pointer to a part corresponding to a selected key.

5. An information processing apparatus comprising; an operation means equipped with a plurality of keys; a display means which displays a pointer for indicating a position on a screen; and a control means which divides at least part of a screen of said display means into a plurality of areas corresponding to said plurality of keys, and when either key among said plurality of keys is selected in order to move said pointer, moves said pointer to an area corresponding to a selected key, divides at least part of said area into a plurality of parts corresponding to said plurality of keys, and when either key among said plurality of keys is selected, moves said pointer to a part corresponding to a selected key.

6. The information processing apparatus according to any one of claims 1 to 5, wherein said operation means further comprising a pointer navigation key; and said control means, when said pointer navigation key is selected, moves said pointer for a distance shorter than a movement distance by said pointer between said areas.

7. The information processing apparatus according to any one of claims 1 to 6, wherein said control means divides all of a screen of said display means into said plurality of areas.

8. An information processing method, wherein the information processing method is realized by an information processing apparatus comprising; an operation means equipped with a plurality of keys; and a display means which displays a pointer for indicating a position on a screen; and when either key among said plurality of keys is selected in order to move said pointer, moves said pointer to an area on a screen of said display means corresponding to a selected key and makes said display means perform a display highlighting said pointer.

9. The information processing method according to claim 8, wherein the display highlighting said pointer further comprising; either of changing brightness of an area of a movement destination of said pointer being different from other areas; blinking a frame of said area; blinking said pointer; or changing a colour of said pointer; or a combination of no smaller than two thereof.

10. The information processing method according to claims 8 or 9, wherein the display highlighting said pointer makes size of said pointer increase for only a predetermined time.

11. An information processing method, wherein the information processing method is realized by an information processing apparatus comprising; an operation means equipped with a plurality of keys; and a display means which displays a pointer for indicating a position on a screen; and when either key among said plurality of keys is selected in order to move said pointer, moves said pointer to an area on a screen of said display means corresponding to a selected key, divides at least part of said area into a plurality of parts corresponding to said plurality of keys, and when either key among said plurality of keys is selected, moves said pointer to a part corresponding to a selected key.
